# EUROPÄISCHE PATENTSCHRIFT

(11) **EP 0 975 678 B1**
(45) Veröffentlichungstag und Bekanntmachung des Hinweises auf die Patenterteilung: **02.10.2002**
(21) Anmeldenummer: 98921422.6
(22) Anmeldetag: 02.04.1998
(51) Int. Cl.: C08F 2/44, C08F 2/34, C08F 10/00

(54) **VERFAHREN ZUR POLYMERISATION VON ALPHA-OLEFINEN IN DER GASPHASE**
METHOD FOR POLYMERIZING ALPHA-OLEFINS IN A GASEOUS PHASE
PROCEDE DE POLYMERISATION D'ALPHA-OLEFINES EN PHASE GAZEUSE

(30) Priorität: 18.04.1997 DE 19716239
(43) Veröffentlichungstag der Anmeldung: 02.02.2000
(73) Patentinhaber: Basell Polyolefine GmbH, 50389 Wesseling (DE)
(72) Erfinder: MIHAN, Shahram, D-67061 Ludwigshafen (DE); LANGE, Armin, D-69121 Heidelberg (DE); ROSENDORFER, Philipp, D-67434 Neustadt (DE); HACK, Johannes, D-67269 Grünstadt (DE)
(86) Internationale Anmeldenummer: EP9801944
(87) Internationale Veröffentlichungsnummer: WO98047928

(56) Entgegenhaltungen:
- WO-A-88/02379
- US-A- 5 391 657

## Beschreibung

Gegenstand der vorliegenden Erfindung ist ein Verfahren zur Polymerisation von α-Olefinen in der Gasphase bei einer Temperatur zwischen 30 und 125°C und einem Druck zwischen 5 und 80 bar.

Weiterhin ist Gegenstand der vorliegenden Erfindung die Verwendung von MgO und/oder ZnO als Antistatikum in diesem Polymerisationsverfahren.

Bei Polymerisationen von α-Olefinen in der Gasphase kommt es häufig zu Belagbildungen an den Wänden des Reaktors sowie zu Brokkenbildung. Diese Belag- und Brockenbildung ist zumindest teilweise auf elektrostatische Aufladung zurückzuführen. Die Belagbildungen führen zu Verstopfungen des Produktaustragssystems und behindern dadurch den kontinuierlichen Betrieb solcher Gasphasenanlagen.

Die elektrostatische Aufladung wird in komplexer Weise von zahlreichen Systemparametern der Gasphasenpolymerisationsverfahren beeinflusst, beispielsweise von der Teilchengrößenverteilung des Polymerisats und des Katalysators, der chemischen Zusammensetzung des Katalysators, der Reaktionstemperatur, dem Reaktionsdruck und der Zusammensetzung des Kreisgases.

In US-A-5 391 657 wird ein Verfahren beschrieben, nach welchem die Belagbildung bei Gasphasenpolymerisationen von α-Olefinen durch Zudosierung von positive Ladungen erzeugenden anorganischen Additiven (MgO, ZnO, Al₂O₃, CuO und Mischungen dieser Oxide) oder negative Ladungen erzeugenden anorganischen Additiven (V₂O₅, SiO₂, TiO₂, Fe₂O₃ und Mischungen dieser Oxide) in Abhängigkeit vom jeweiligen Status der elektrostatischen Aufladung im Reaktor verhindert werden kann. Dieses Verfahren setzt jedoch die ständige Messung der elektrostatischen Aufladung sowie ein komplex geregeltes Zudosierungssystem in Abhängigkeit von dieser Messung voraus und ist daher mit einem erheblichen apparativen Aufwand verbunden.

In der Literatur sind auch bereits Katalysatoren oder Katalysatorsysteme bekannt, die MgO als Trägermaterial oder als modifizierenden Zusatz enthalten. So wird in US-A-5 408 015 ein Katalysatorsystem bestehend aus einem Chromoxid-Katalysator, einem auf MgO geträgertem Zieglerkatalysator sowie etwa 1 bis 15 Gew.-% MgO als Zusatz beschrieben. Das Verhältnis von Chromoxid-Katalysator zu MgO geträgertem Zieglerkatalysator beträgt zwischen 6 : 1 und 100 : 1, so daß die Gesamtmischung mindestens 2 Gew.-% MgO enthält. Durch den Zusatz von MgO wurde die Aufgabe gelöst, Ethylenpolymere oder Copolymere (HDPE) mit breiter Molekulargewichtsverteilung bereitzustellen, die besonders für Blasformanwendungen vorteilhafte Eigenschaften aufweisen.

In US-A-4 946 914 wird ein Trägerkatalysator beschrieben, welcher durch Kombination eines chromhaltigen Katalysators mit einem Modifizierungsmittel, welches ein Oxid eines Elements der Gruppe IIa des Periodensystems der Elemente ist, hergestellt wird. Als Modifizierungsmittel wird beispielsweise MgO genannt. Das Modifizierungsmittel wird zugesetzt, um Polymere mit höherem High Load Melt Index (HLMI) zu erhalten als mit einem Katalysatorsystem ohne dieses Modifizierungsmittel. Zu diesem zweck wird es als wichtig herausgestellt, daß das Modifizierungsmittel mindestens 0,5 Gew.-%, am besten etwa 2 Gew.-% Wasser enthält.

Die bislang bekannten Verfahren zur Verhinderung elektrostatoscher Aufladung bei Gasphasenpolymerisationen von α-Olefinen lassen hinsichtlich ihrer Wirksamkeit oder ihres technischen Aufwandes zu wünschen übrig.

Der vorliegenden Erfindung lag daher die Aufgabe zugrunde, ein Verfahren zur Polymerisation von α-Olefinen in der Gasphase zu finden, bei welchem in einfacher und effizienter Weise die Belagbildung an den Reaktorwänden und am Reaktorboden verhindert werden kann.

Demgemäß wurde ein Verfahren zur Polymerisation von α-Olefinen in der Gasphase bei einer Temperatur zwischen 30 und 150°C und einem Druck zwischen 5 und 80 bar gefunden, welches dadurch gekennzeichnet ist, daß man einen Katalysator oder eine Katalysatormischung einsetzt, welche als Antistatikum 0,1 bis 5 Gew.-% ZnO und/oder wasserfreies MgO, bezogen auf die Gesamtmenge der Katalysatormischung, enthält, wobei ein Verfahren ausgeschlossen ist, bei welchem die Katalysatormischung einen Chromkatalysator und einen MgO-geträgerten Zieglerkatalysator, welcher mit einem Alken und mit Alkylaluminiumhydrid modifiziert ist, sowie freies MgO enthält und die Gesamtmenge des MgO nicht weniger als 2 Gew.-% der Katalysatormischung beträgt.

Nach dem erfindungsgemäßen Verfahren lassen sich besonders Ethylen und Propylen und insbesondere Ethylen homo- oder copolymerisieren. Als Comonomere kommen besonders α-Olefine mit 3 bis 8 C-Atomen in Betracht. Besonders vorteilhaft ist ein Verfahren, bei welchem Mischungen aus Ethylen mit C₃-C₈-α-Olefinen copolymerisiert werden. Als C₃-C₈-α-Olefine kommen dabei vor allem Propen, Buten, Penten, 4-Methylpenten, Hexen, Hepten und Octen sowie Gemische dieser α-Olefine in Betracht.

Das Polymerisationsverfahren wird bei einer Temperatur zwischen 30 und 125°C, vorzugsweise zwischen 80 und 120°C durchgeführt. Der Druck beträgt zwischen 5 und 80 bar, vorzugsweise zwischen 20 und 60 bar.

Die Polymerisation kann nach verschiedenen Gasphasenverfahren durchgeführt werden, also beispielsweise in Gasphasen-Wirbelschicht oder in gerührten Gasphasen.

Als Antistatikum wird ZnO und/oder wasserfreies MgO eingesetzt. Wasserfrei soll in diesem Zusammenhang bedeuten, daß der Wassergehalt des MgO geringer als 0,5 Gew.-% vorzugsweise geringer als 0,3 Gew.-%, bezogen auf die Gesamtmasse des MgO, sein soll. Auch das ZnO wird vorzugsweise in wasserfreier Form eingesetzt. Die Entwässerung der Oxide erfolgt am einfachsten durch Erhitzen unter vermindertem Druck, beispielsweise auf eine Temperatur zwischen 150 und 450°C unter Vakuum. Dabei hängt die Trocknungszeit von der gewählten Temperatur ab. Gute Ergebnisse werden z.B. bei 250°C im Vakuum über einen Zeitraum von 8 Stunden erzielt.

Unter den antistatisch wirksamen Oxiden ist ZnO besonders hervorzuheben.

Das Antistatikum oder das Gemisch der beiden Antistatika wird dem Katalysator oder der Katalysatormischung in einer Menge von 0,1 bis 5 Gew.-%, bezogen auf die Gesamtmenge des Katalysators oder der Katalysatormischung, zugegeben. Vorzugsweise enthält der Katalysator oder die Katalysatormischung das Antistatikum in einer Menge von mehr als 0,2 und weniger als 2 Gew.-%.

Die antistatisch wirksamen Oxide können in unterschiedlichen Korngrößen eingesetzt werden. Besonders wirksam sind die Oxide, wenn sie sehr feinkörnig sind. So haben sich mittlere Partikeldurchmesser von 10 bis 200 µm, insbesondere von 20 bis 100 µm als besonders geeignet erwiesen. Weiterhin vorteilhaft sind Partikeldurchmesser etwa in der Größe der Katalysatorpartikel.

In dem erfindungsgemäßen Verfahren können verschiedene Katalysatoren, wie sie zur Polymerisation von α-Olefinen üblich sind, eingesetzt werden. So kommen als Katalysatoren beispielsweise die auch als Phillipskatalysatoren bekannten geträgerten Chromkatalysatoren in Betracht.

Die Beladung von Trägermaterialien mit löslichen Chromverbindungen ist allgemein bekannt. Als Trägermaterialien eigenen sich besonders anorganische Verbindungen, insbesondere poröse Oxide wie SiO₂, Al₂O₃, MgO, ZrO₂, TiO₂, B₂O₃, CaO, ZnO oder Mischungen dieser Oxide. Die Trägermaterialien weisen vorzugsweise einen Teilchendurchmesser zwischen 1 und 300 Am, insbesondere von 30 bis 70 µm auf. Besonders bevorzugte Träger sind beispielsweise Kieselgele und Alumosilikatgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Die Dotierung des Katalysatorträgers mit der chromhaltigen Aktivkomponente erfolgt vorzugsweise aus einer Lösung oder bei flüchtigen Verbindungen aus der Gasphase. Geeignete Chromverbindungen sind Chrom(VI)oxid, Chromsalze, wie z.B. Chrom(III)nitrat, Chrom(III)acetat, Komplexverbindungen, wie Chrom(III)acetylacetonat oder Chromhexacarbonyl, oder auch metallorganische Verbindungen des Chroms, wie Bis(cyclopentadienyl)chrom(II), organische Chrom(VI)säureester oder Bis(aren)chrom(0).

Zur Beladung des Trägers verfährt man im allgemeinen so, daß man das Trägermaterial in einem Lösungsmittel mit einer Chromverbindung in Kontakt bringt, das Lösungsmittel entfernt und den Katalysator bei einer Temperatur von 400 bis 1100°C calciniert. Das Trägermaterial kann dazu in einem Lösungsmittel oder auch in einer Lösung der Chromverbindung suspendiert werden.

Außer mit der chromhaltigen Aktivkomponente kann das Trägersystem noch mit weiteren Dotierstoffen beladen werden. Als solche Dotierstoffe kommen z.B. Verbindungen des Bors, des Fluors, des Aluminiums, des Siliciums, des Phosphors und des Titans in Betracht. Diese Dotierstoffe werden vorzugsweise gemeinsam mit den Chromverbindungen auf den Träger aufgebracht, können jedoch auch in einem getrennten Schritt vor oder nach der Chrombeladung auf den Träger aufgebracht werden.

Als Lösungsmittel für die Trägerdotierung eignen sich beispielsweise Wasser, Alkohole, Ketone, Ether, Ester und Kohlenwasserstoffe.

Die Konzentration der Dotierlösung beträgt im allgemeinen 0,1- 200 g Chromverbindung/1 Lösungsmittel, bevorzugt 1 - 50 g/1.

Das Gewichtsverhältnis der Chromverbindungen zum Träger während der Beladung beträgt im allgemeinen von 0,001 : 1 bis 200 : 1, vorzugsweise von 0,005 : 1 bis 100 : 1.

Eine bevorzugte Ausführungsform des Verfahrens sieht vor, daß der Chromkatalysator in einer Weise hergestellt wird, daß man der inaktiven Katalysatorvorstufe die gewünschte Menge MgO und/oder ZnO zusetzt und anschließend dieses Gemisch in üblicher Weise aktiviert.

Zur Aktivierung wird die trockene Katalysatorvorstufe beispielsweise in einem Wirbelschichtreaktor in einer oxidierenden, sauerstoffhaltigen Atmosphäre bei Temperaturen zwischen 400 und 1100°C calciniert. Die Abkühlung erfolgt vorzugsweise unter einer Inertgasatmosphäre, um die Adsorption von Sauerstoff auszuschließen. Diese Calcinierung läßt sich auch in Gegenwart von Fluorverbindungen wie z.B. Ammoniumhexafluorosilikat ausführen, wodurch die Katalysatoroberfläche mit Fluoratomen modifiziert wird. Vorzugsweise wird die Calcinierung bei Temperaturen zwischen 500 und 800°C durchgeführt.

Weiterhin können in dem erfindungsgemäßen Verfahren auch Ziegler-Katalysatoren oder Ziegler-Natta-Katalysatoren eingesetzt werden. Übliche Katalysatoren dieser Art werden beispielsweise in Ullmann's Encyclopedia of Industrial Chemistry, Vol. A 21, 4. Aufl. 1992, S. 502 ff, beschrieben. Besonders sollen hier solche Katalysatoren genannt werden, wie sie z.B. in US-A-4 857 613 sowie in DE-A-19 529 240 beschrieben werden.

Eine weitere bevorzugte Ausführungsform des erfindungsgemäßen Verfahrens ist dadurch gekennzeichnet, daß als Katalysator oder als Bestandteil der Katalysatormischung ein Metallocenkatalysator eingesetzt wird.

Als Metallocenkatalysatoren kommen beispielsweise solche in Betracht, bei denen als partikuläres organisches oder anorganisches Trägermaterial Polyolefine wie Polyethylen, Polypropylen, Poly-1-buten und Polymethyl-1-penten und Copolymere mit den diesen Polymeren zugrundeliegenden Monomeren, weiterhin Polyester, Polyamide, Polyvinylchlorid, Polyacrylate und -methacrylate und Polystyrol eingesetzt werden. Bevorzugt sind jedoch anorganische Trägermaterialien wie poröse Oxide, z.B. SiO₂, Al₂O₃, MgO, ZrO₂, TiO_{2,} B₂O₃, CaO, ZnO. Auch Metallhalogenide wie MgCl₂ kommen als Träger in Betracht. Die Trägermaterialien weisen vorzugsweise einen Teilchendurchmesser zwischen 1 und 300 µm auf, insbesondere von 30 bis 70 µm. Besonders bevorzugte Träger sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Besonders geeignete Metallocenkatalysatoren sind solche, die Metallocenkomplexe der allgemeinen Formel I 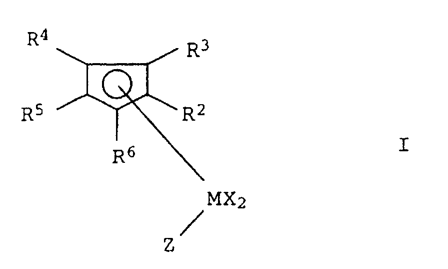 enthalten, in der die Substituenten folgende Bedeutung haben:
- M: Titan, Zirkonium, Hafnium, Vanadium, Niob oder Tantal
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁷ oder -NR⁷R⁸,
wobei
- R⁷ und R⁸: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R² bis R⁶: Wasserstoff, C₁- bis C₁₀-Alkyl,
5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für
4 bis 15 C-Atome aufweisende gesättigte oder ungesättigte cyclische Gruppen stehen können oder Si(R⁹)₃ mit
- R⁹: C₁- bis C₁₀-Alkyl, C₃- bis C₁₀-Cycloalkyl oder C₆- bis C₁₅-Aryl,
- Z: für X oder 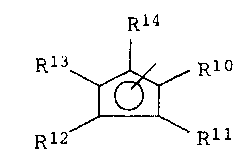 steht,
wobei die Reste
- R¹⁰ bis R¹⁴: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁵)₃ mit
- R¹⁵: C₁- bis C₁₀-Alkyl, C₆- bis C₁₅-Aryl oder C₃- bis C₁₀-Cycloalkyl,
oder wobei die Reste R⁵ und Z gemeinsam eine Gruppierung -R¹⁶-Abilden, in der
- R¹⁶: 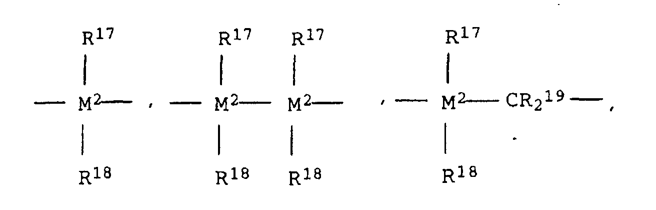 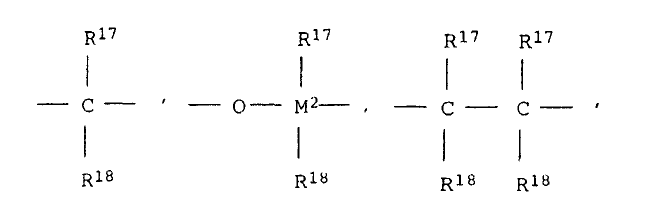 = BR¹⁷, = AlR¹⁷, -Ge-, -Sn-, -O-, -S-, = SO, = SO₂, = NR¹⁷,
= CO, = PR¹⁷ oder = P(O)R¹⁷ ist,
wobei
- R¹⁷, R¹⁸ und R¹⁹: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A: ―○―, ―S―, 〉NR²⁰ oder 〉PR²⁰ bedeuten, mit
- R²⁰: C₁- bis C₁₀-Alkyl, C₆ - bis C₁₅-Aryl,
C₃- bis C₁₀-Cycloalkyl, Alkylaryl oder Si(R²¹)₃,
- _{R}21: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁵ und R¹³ gemeinsam eine Gruppierung -R¹⁶bilden.

Von den Metallocenkomplexen der allgemeinen Formel I sind 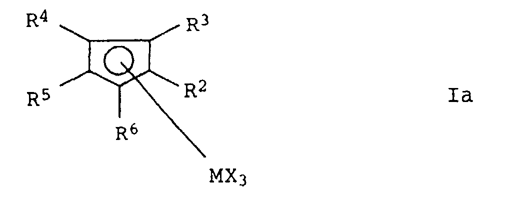 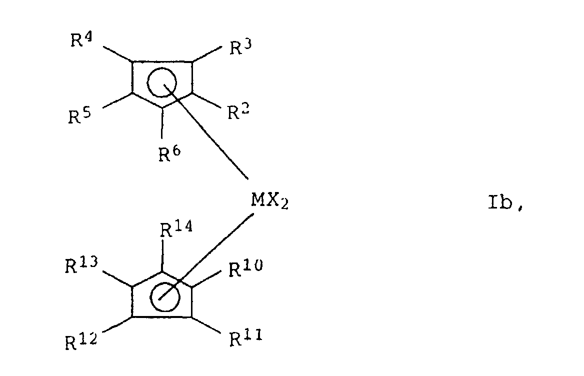 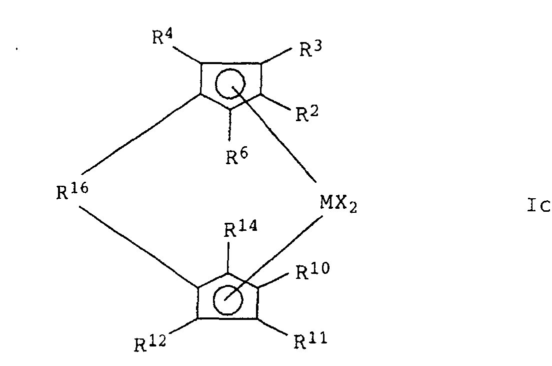 und 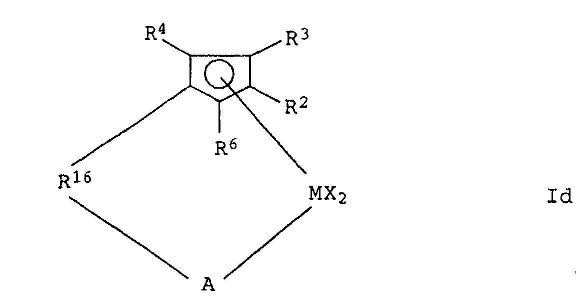 bevorzugt.

Besonders bevorzugt sind solche Übergangsmetallkomplexe, welche zwei miteinander verbrückte aromatische Ringsysteme als Liganden enthalten, also besonders die Übergangsmetallkomplexe der allgemeinen Formeln Ib und Ic.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: Chlor, C₁-bis C₄-Alkyl oder Phenyl und
- R² bis R⁶: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: für Chlor, C₁-bis C₄-Alkyl oder Phenyl,
- R² bis R⁶: Wasserstoff, C₁- bis C₄-Alkyl oder Si(R⁹)₃,
- R¹⁰ bis R¹⁴: Wasserstoff, C₁- bis C₄-Alkyl oder Si(R¹⁵)₃ bedeuten.

Insbesondere sind die Verbindungen der Formel Ib geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid
sowie die entsprechenden Dimethylzirkoniumverbindungen.

Von den Verbindungen der Formel Ic sind diejenigen besonders geeignet, in denen
- R² und R¹⁰: gleich sind und für Wasserstoff oder C₁- bis C₁₀-Alkylgruppen stehen,
- R⁶ und R¹⁴: gleich sind und für Wasserstoff, eine Methyl-, Ethyl-, iso-Propyl- oder tert.-Butylgruppe stehen
- R³, R⁴, R¹¹ und R¹²: die Bedeutung
R⁴ und R¹² C₁- bis C₄-Alkyl
R³ und R¹¹ Wasserstoff
haben oder zwei benachbarte Reste R³ und R⁴ sowie
R¹¹ und R¹² gemeinsam für 4 bis 12 C-Atome aufweisende cyclische Gruppen stehen,
- R¹⁶: für 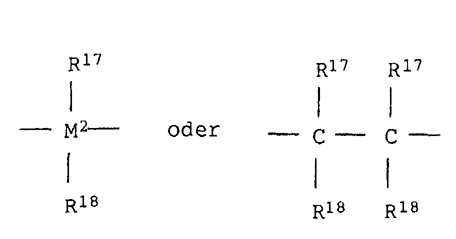 steht,
- M: für Titan, Zirkonium oder Hafnium und
- X: für Chlor, C₁-bis C₄-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Dimethylsilandiylbis(-2-methylindenyl)-hafniumdichlorid
sowie die entsprechenden Dimethylzirkoniumverbindungen.

Bei den Verbindungen der allgemeinen Formel Id sind als besonders geeignet diejenigen zu nennen, in denen
- M: für Titan oder Zirkonium,
- X: für Chlor, C₁-bis C₄-Alkyl oder Phenyl stehen.
- R¹⁶: für 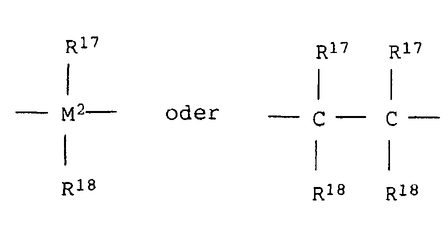 steht,
- A: für ―O―, ―S―, 〉NR²⁰
und
- R² bis R⁴ und R⁶: für Wasserstoff, C₁- bis C₁₀-Alkyl,
C₃- bis C₁₀-Cycloalkyl, C₆- bis C₁₅-Aryl oder Si(R⁹)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als weitere Komponente enthält der in dem erfindungsgemäßen Verfahren eingesetzte Katalysator üblicherweise eine metalloceniumionenbildende Verbindung.

Geeignete metalloceniumionen-bildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel II

M³X¹X²X³ II

bevorzugt, in der
- M³: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der X¹, X² und X³ gleich sind, vorzugsweise Tris(pentafluorphenyl)boran.

Als ionische Verbindungen mit lewissauren Kationen sind Verbindungen der allgemeinen Formel III

[(Y^{a+})Q₁Q₂...Q_{z}]^{d+} III

geeignet, in denen
- Y: ein Element der I. bis VI. Hauptgruppe oder der I. bis VIII. Nebengruppe des Periodensystems bedeutet,
- Q₁ bis Q₂: für einfach negativ geladene Reste wie C₁- bis C₂₈-Alkyl, C₆- bis C₁₅-Aryl, Alkylaryl, Arylalkyl, Halogenalkyl, Halogenaryl mit jeweils
6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Besonders geeignet als metalloceniumionen-bildende Verbindung sind offenkettige oder cyclische Alumoxanverbindungen der allgemeinen Formel IV oder V 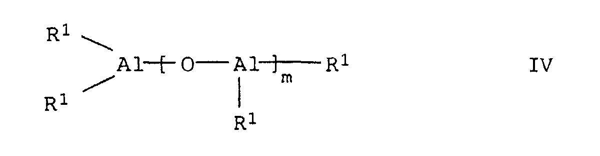 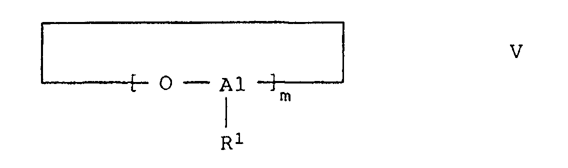 wobei
- R¹: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Weiterhin können als metalloceniumionen-bildende Verbindungen Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Das erfindungsgemäße Verfahren führt zu einer erheblichen Verringerung der Belagbildung im Gasphasenreaktor und damit zu deutlich längeren Laufzeiten. Dabei erfordert es keine zusätzlichen Installationen und keine zusätzlichen Regelungssysteme. Die folgenden Beispiele erläutern das Verfahren.

### Beispiele

### Beispiel 1

### Herstellung eines geträgerten Chromkatalysators

185 g Silikagel (SG 332, Hersteller Grace, Germany) wurden in 400 ml einer 3,56 gew.-%igen Lösung von Cr(NO₃)₃·9H₂O in Methanol suspendiert. Anschließend wurde das Methanol unter vermindertem Druck abdestilliert und diese Katalysatorvorstufe bei 650°C in Gegenwart von Sauerstoff aktiviert.

### Beispiel 2

### Herstellung eines antistatisch modifizierten Chromkatalysators

Die antistatisch wirksamen Oxide (mittlere Teilchengröße 50 µm) wurden bei 250°C im Vakuum über 8 Stunden getrocknet und anschließend mit Stickstoff gespült. Das Oxidpulver wurde dann in den in Tabelle 1 angegebenen Mengenverhältnissen mit der wie in Beispiel 1 hergestellten Katalysatorvorstufe gemischt. Anschließend wurde dieses Gemisch bei 650°C in Gegenwart von Sauerstoff aktiviert.

### Beispiele 3 bis 10

### Polymerisation von Ethylen in Gegenwart der antistatischen Oxide

Die Polymerisationsversuche wurden in einem gerührten 1 l-Autoklaven in der Gasphase bei 110°C und bei einem Ethylendruck von 40 bar durchgeführt. Das elektrostatische Potential während der Polymerisation wurde mit einer Sonde, wie sie für die Messung elektrostatischer Aufladung üblich sind, gemessen. In Tabelle 1 sind die Reaktionszeiten sowie die Versuchsergebnisse angegeben.

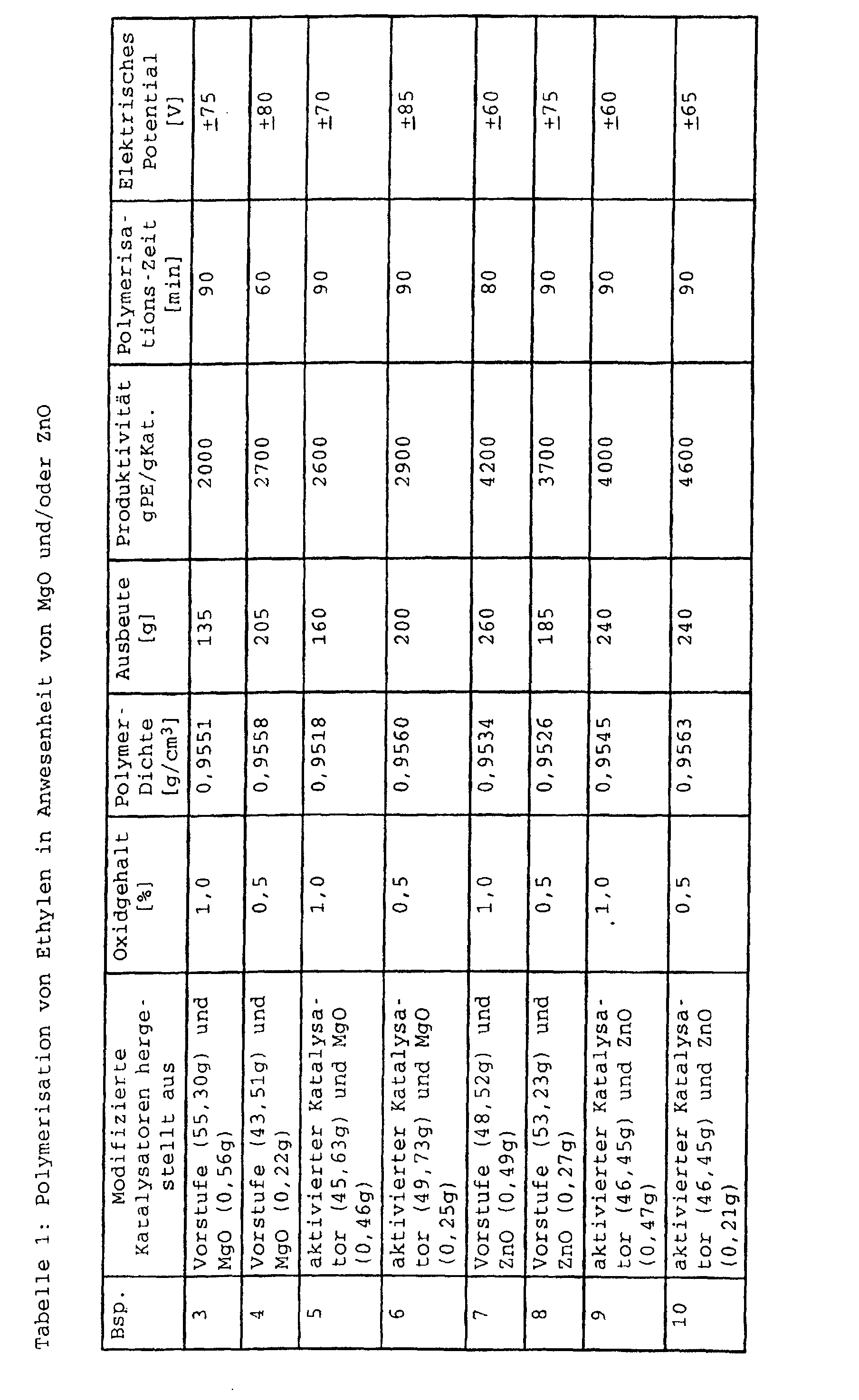

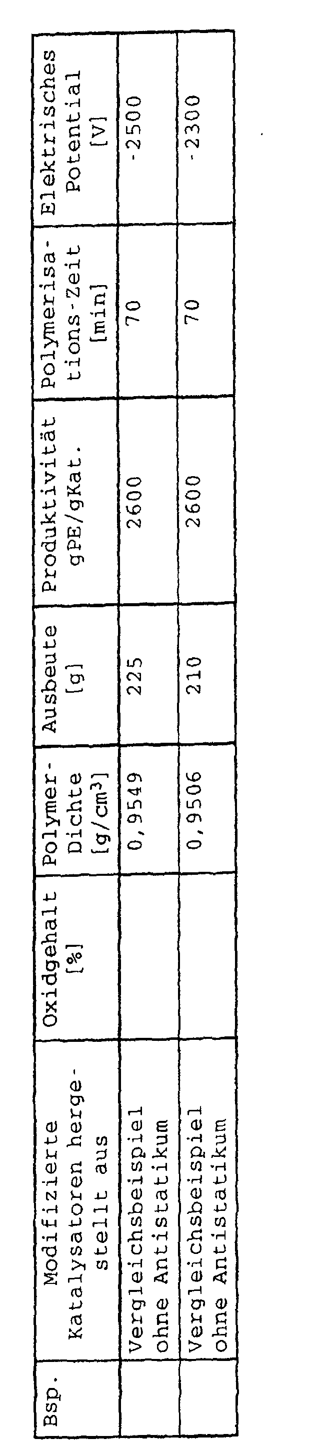

## Patentansprüche

1. Verfahren zur Polymerisation von α-Olefinen in der Gasphase bei einer Temperatur zwischen 30 und 150°C und einem Druck zwischen 5 und 80 bar, **dadurch gekennzeichnet, daß** man einen Katalysator oder eine Katalysatormischung einsetzt, welche als Antistatikum 0,1 bis 5 Gew.-% ZnO und/oder wasserfreies MgO, bezogen auf die Gesamtmenge der Katalysatormischung, enthält, wobei ein Verfahren ausgeschlossen ist, bei welchem die Katalysatormischung einen Chromkatalysator und einen MgO-geträgerten Zieglerkatalysator, welcher mit einem Alken und mit Alkylaluminiumhydrid modifiziert ist, sowie freies MgO enthält und die Gesamtmenge des MgO nicht weniger als 2 Gew.-% der Katalysatormischung beträgt.

2. Verfahren nach Anspruch 1, **dadurch gekennzeichnet, daß** als Katalysator oder als Bestandteil der Katalysatormischung ein geträgerter Chromkatalysator eingesetzt wird.

3. Verfahren nach Anspruch 2, **dadurch gekennzeichnet, daß** der Chromkatalysator in einer Weise hergestellt wird, daß man der inaktiven Katalysatorvorstufe die gewünschte Menge MgO und/oder ZnO zusetzt und anschließend dieses Gemisch in üblicher Weise aktiviert.

4. Verfahren nach Anspruch 1, **dadurch gekennzeichnet, daß** als Katalysator oder als Bestandteil der Katalysatormischung ein Zieglerkatalysator oder Ziegler-Natta-Katalysator eingesetzt wird.

5. Verfahren nach Anspruch 1, **dadurch gekennzeichnet, daß** als Katalysator oder als Bestandteil der Katalysatormischung ein Metallocenkatalysator eingesetzt wird.

6. Verfahren nach Anspruch 1, **dadurch gekennzeichnet, daß** der Katalysator oder die Katalysatormischung als Antistatikum ZnO enthält.

7. Verfahren nach Anspruch 1, **dadurch gekennzeichnet, daß** der Katalysator oder die Katalysatormischung das Antistatikum in einer Menge von mehr als 0,2 und weniger als 2 Gew.-% enthält.

8. Verfahren nach Anspruch 1, **dadurch gekennzeichnet, daß** als α-Olefin Ethylen polymerisiert wird.

9. Verfahren nach Anspruch 1, **dadurch gekennzeichnet, daß** als α-Olefine Mischungen aus Ethylen mit C₃-C₈-α-Olefinen copolymerisiert werden.

10. Verwendung von MgO und/oder ZnO als Antistatikum in einem Verfahren gemäß den Ansprüchen 1 bis 9.

## Claims

1. A process for the polymerization of α-olefins in the gas phase at from 30 to 150°C and a pressure of from 5 to 80 bar, wherein use is made of a catalyst or a catalyst mixture containing as antistatic agent from 0.1 to 5 % by weight of ZnO and/or anhydrous MgO, based on the total amount of the catalyst mixture, except for a process in which the catalyst mixture comprises a chromium catalyst and an MgO-supported Ziegler catalyst which is modified with an alkene and with alkylaluminum hydride and also comprises free MgO and the total amount of the MgO is not less than 2 % by weight of the catalyst mixture.

2. A process as claimed in claim 1, wherein a supported chromium catalyst is used as catalyst or as a constituent of the catalyst mixture.

3. A process as claimed in claim 2, wherein the chromium catalyst is prepared by adding the desired amount of MgO and/or ZnO to the inactive catalyst precursor and subsequently activating this mixture in a customary manner.

4. A process as claimed in claim 1, wherein a Ziegler catalyst or Ziegler-Natta catalyst is used as catalyst or as a constituent of the catalyst mixture.

5. A process as claimed in claim 1, wherein a metallocene catalyst is used as catalyst or as a constituent of the catalyst mixture.

6. A process as claimed in claim 1, wherein the catalyst or the catalyst mixture comprises ZnO as antistatic agent.

7. A process as claimed in claim 1, wherein the antistatic agent is present in the catalyst or the catalyst mixture in an amount of more than 0.2 % by weight and less than 2 % by weight.

8. A process as claimed in claim 1, wherein ethylene is polymerized as α-olefin.

9. A process as claimed in claim 1, wherein a mixture of ethylene with C₃-C₈-α-olefins is copolymerized as α-olefins.

10. The use of MgO and/or ZnO as antistatic agent in a process as claimed in any of claims 1 to 9.

## Revendications

1. Procédé pour la polymérisation d'α-oléfines en phase gazeuse à une température entre 30 et 150°C et une pression entre 5 et 80 bar, **caractérisé par le fait qu'**on met en oeuvre un catalyseur ou un mélange de catalyseurs, qui contient comme antistatique 0,1 à 5 % en poids de ZnO et/ou MgO anhydre, tandis qu'est exclu un procédé dans lequel le mélange de catalyseurs contient un catalyseur au chrome et un catalyseur de Ziegler sur support de MgO, qui est modifié avec un alcène et avec de l'hydrure d'alkylaluminium, ainsi que du MgO libre, et la quantité totale de MgO n'est pas inférieure à 2 % en poids du mélange de catalyseurs.

2. Procédé selon la revendication 1, **caractérisé par le fait qu'**on utilise comme catalyseur ou comme composant du mélange de catalyseurs un catalyseur au chrome sur support.

3. Procédé selon la revendication 2, **caractérisé par le fait que** le catalyseur au chrome est préparé par addition au précurseur de catalyseur inactif de la quantité souhaitée de MgO et/ou de ZnO, et ensuite activation de ce mélange de manière classique.

4. Procédé selon la revendication 1, **caractérisé par le fait qu'**on met en oeuvre comme catalyseur ou comme composant du mélange de catalyseurs un catalyseur de Ziegler ou un catalyseur de Ziegler-Natta.

5. Procédé selon la revendication 1, **caractérisé par le fait qu'**on met en oeuvre comme catalyseur ou comme composant du mélange de catalyseurs un catalyseur au métallocène.

6. Procédé selon la revendication 1, **caractérisé par le fait que** le catalyseur ou le mélange de catalyseurs contient ZnO comme antistatique.

7. Procédé selon la revendication 1, **caractérisé par le fait que** le catalyseur ou le mélange de catalyseurs contient l'antistatique en une quantité supérieure à 0,2 et inférieure à 2 % en poids.

8. Procédé selon la revendication 1, **caractérisé par le fait qu'**on polymérise de l'éthylène comme α-oléfine.

9. Procédé selon la revendication 1, **caractérisé par le fait qu'**on copolymérise comme α-oléfines des mélanges d'éthylène avec des α-oléfines en C₃-C₈.

10. Utilisation de MgO et/ou de ZnO comme antistatique dans un procédé selon les revendications 1 à 9.
